Europäisches Patentamt

European Patent Office

Office européen des brevets

(11) Veröffentlichungsnummer: **0 311 075**
A1

## (12) EUROPÄISCHE PATENTANMELDUNG

(21) Anmeldenummer: 88116568.2

(22) Anmeldetag: 06.10.88

(51) Int. Cl.4: **B60C 25/06**

(30) Priorität: 06.10.87 DE 3733779

(43) Veröffentlichungstag der Anmeldung:
12.04.89 Patentblatt 89/15

(84) Benannte Vertragsstaaten:
ES FR GB IT SE

(71) Anmelder: WEILNHAMMER Maschinenbau
GmbH
Esterndorf 102
D-8250 Dorfen-Stadt 1(DE)

(72) Erfinder: Weilnhammer, August,
Esterndorf 102,
D-8250 Dorfen 1,(DE)

(74) Vertreter: Schieschke, Klaus, Dipl.-Ing. et al
Patentanwälte Dipl.-Ing. E. Eder Dipl.-Ing. K.
Schieschke Elisabethstrasse 34
D-8000 München 40(DE)

(54) **Montagevorrichtung für mindestens einen Reifen.**

(57) Die Erfindung bezieht sich auf eine Montagevorrichtung für mindestens einen Reifen (1), dessen
Reifenwulste (75) von außen in das Felgenhorn (11)
einer Felge (2) einlagerbar sind, mit mindestens einer den Reifen (1) im Bereich der Reifenwulst (75)
beaufschlagenden Montagerolle. Die Montagevorrichtung weist hierbei beidseitig der Felge (2) jeweils
als Montagewerkzeug (6 bzw. 6') eine den betreffenden Reifenwulst (75) beaufschlagende, als Kegelrolle
(4) ausgebildete Montagerolle mit mindestens einer
in Laufrichtung vorgeordneten Druckrolle (5) auf. Kegelrolle (4) und Druckrolle (5) sind zustellbar ausgebildet, wobei über eine Antriebsvorrichtung eine
Drehbewegung zwischen Reifen (1) und Felge (2)
einerseits und den Montagewerkzeugen (6 bzw. 6')
andererseits erzeugbar ist.

FIG. 1

## Montagevorrichtung für mindestens einen Reifen

Die Erfindung bezieht sich auf eine Montagevorrichtung für mindestens einen Reifen, dessen Reifenwulste von außen in das Felgenhorn einer Felge einlagerbar sind, mit mindestens einer den Reifen im Bereich der Reifenwulste beaufschlagenden Montagerolle.

Als neuester Stand der Technik ist bereits ein Fahrzeugrad bekannt, bei welchem die Reifenwulste nicht, wie bisher, innen am Felgenhorn liegen, sondern außenherum greifen. Zur Montage eines derartigen Fahrzeugrades ist hierfür eine Montagevorrichtung bekannt, bei welcher als Montagerolle eine prismatische Rolle Anwendung findet, welche ihrerseits angetrieben wird. Diese prismatische angetriebene Rolle dient zum Aufrollen jeweils eines Reifenwulstes über das Felgenhorn der Felge. Das Rad wird bei dieser bekannten Vorrichtung durch die angetriebene prismatische Rolle in eine Drehbewegung versetzt.

Nachteilig ist bei dieser bekannten Konstruktion, daß der Reifenwulst mit innenliegendem Stahldrahtring über einen zu kurzen Abstand über das Felgenhorn der Felge gezwängt werden muß, wodurch sich ein erheblicher Kraftaufwand ergibt. Die gesamte Anordnung ist zudem infolge des Antriebs der prismatischen Rolle kostenaufwendig.

Der vorliegenden Erfindung liegt die Aufgabe zugrunde, eine Montagevorrichtung für die eingangs genannte Fahrzeugart zu schaffen, welche bei einfacherem und kostensparenderem Auf bau eine schnelle Montage des Reifens auf der Felge ermöglicht.

Diese Aufgabe wird erfindungsgemäß dadurch gelöst, daß die Montagevorrichtung beidseitig der Felge jeweils als Montagewerkzeug eine den betreffenden Reifenwulst beaufschlagende, als Kegelrolle ausgebildete Montagerolle mit mindestens einer in Laufrichtung vorgeordneten Druckrolle aufweist, daß die Kegelrolle und die Druckrolle zustellbar ausgebildet sind und daß über eine Antriebsvorrichtung eine Drehbewegung zwischen Reifen und Felge einerseits und den Montagewerkzeugen andererseits erzeugbar ist. Hierdurch ergibt sich der Vorteil, daß eine gleichzeitige Montage beider Reifenwulste möglich ist, wobei eine getrennte Aufspannung der Felge entfällt.

In weiterer Ausgestaltung der Erfindung können die Montagewerkzeuge zwischen zwei den Reifen stirnseitig beaufschlagenden, zustellbaren rotierenden Antriebsrollen angeordnet sein. Hierbei sind bei vertikaler Anordnung von Reifen und Felge diese Antriebsrollen in derselben horizontalen Ebene angeordnet und heb- und senkbar gelagert. Die beiden Antriebsrollen können auf einem gemeinsamen Schlitten angeordnet sein. Auch die Montagewerkzeuge können jeweils auf einem verschiebbaren Schlitten gelagert werden. Die vorgenannten Schlitten können pneumatisch, hydraulisch oder mechanisch steuerbar sein.

Alternativ besteht die Möglichkeit, daß eine Spannvorrichtung für den Reifenwulst und/oder die Felge Anwendung findet.

Die Druckrollen des jeweiligen Montagewerkzeuges können zylindrisch, konkav, konvex, kegelstumpfförmig oder abgesetzt ausgebildet sein.

In weiterer Ausgestaltung der Erfindung können die Montagewerkzeuge den stationär angeordneten Reifen und die stationär angeordnete Felge umlaufen.

Die Erfindung wird nachfolgend anhand von in der Zeichnung dargestellten Ausführungsbeispielen näher beschrieben. In der Zeichnung zeigen:

Fig. 1 eine Vorderansicht der erfindungsgemäßen Montagevorrichtung mit geschnittenem Reifen und Felge,

Fig. 2 eine Seitenansicht der Konstruktion nach Fig. 1,

Fig. 3 bis 16 verschiedene Ausführungsmöglichkeiten der Gestaltung der Druckrolle, jeweils in Vorder- und Seitenansicht.

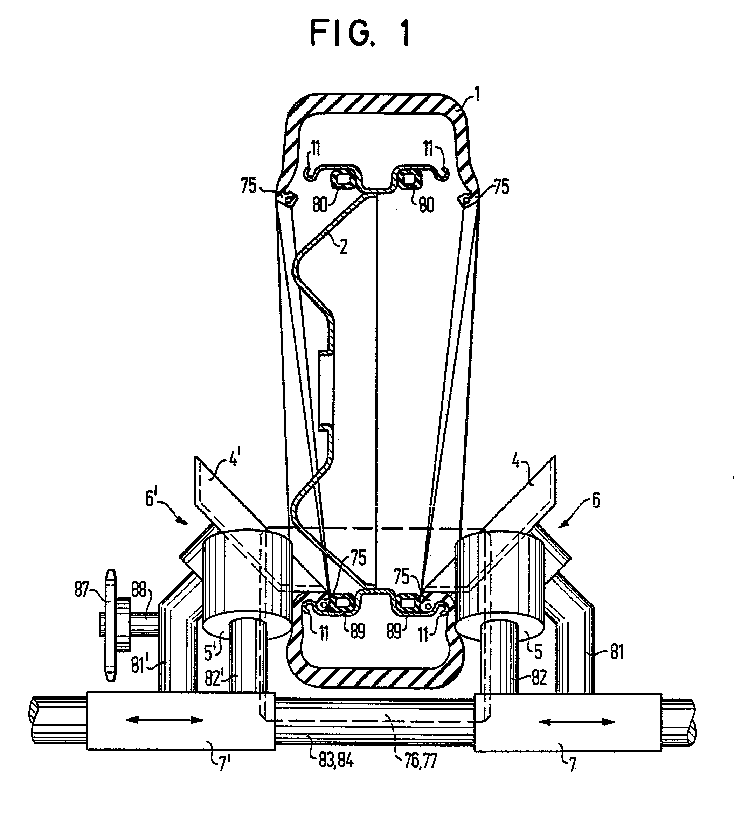

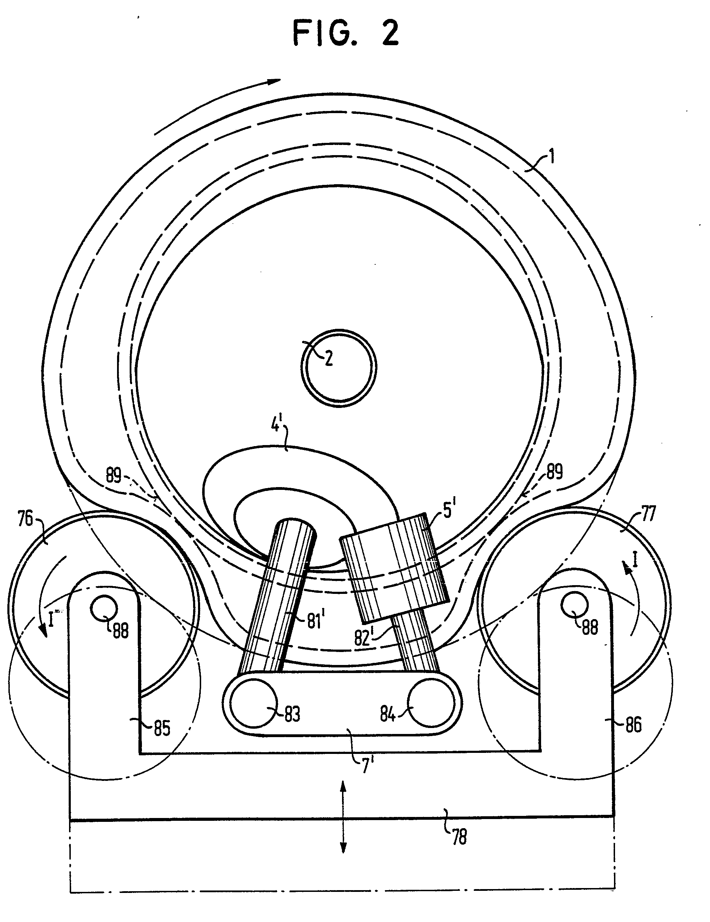

Nach Fig. 1 und 2 besteht das Problem darin, einen Reifen 1 funktionsgerecht mit einer Felge 2 zu verbinden. Dieser Reifen 1 weist hierbei mit Stahldrahtringen armierte Reifenwulste 75 auf, welche von außen über das Felgenhorn 11 der Felge 2 gezwängt werden müssen. Im Inneren der Felge befinden sich Abdeckringe 80.

Zum Zusammenbau der Felge 2 mit dem Reifen 1 ist eine Montagevorrichtung vorgesehen, welche im wesentlichen beidseitig der Felge 2 jeweils als Montagewerkzeuge 6 bzw. 6' eine den betreffenden Reifenwulst 5 beaufschlagende, als Kegelrolle 4 ausgebildete Montagerolle aufweist. In Laufrichtung nach Fig. 2 ist dieser jeweiligen Kegelrolle 4 mindestens eine Druckrolle 5 vorgeordnet.

Wie aus Fig. 1 ersichtlich, sind jeweils die Kegelrolle 4 bzw. 4' und die Druckrolle 5 bzw. 5' drehbar über Tragarme 81, 81' bzw. 82, 82' auf einem Schlitten 7 bzw. 7' angeordnet, welche pneumatisch, hydraulisch oder mechanisch in Pfeilrichtung nach Fig. 1 auf einer Führung mit zwei Bahnen 83 und 84 (Fig. 2) bewegbar und gegenüber der Felge 2 zustellbar sind.

Gemäß Fig. 2 sind die Montagewerkzeuge 6 und 6' zwischen zwei den Reifen 1 stirnseitig beaufschlagenden, zustellbaren, rotierenden Antriebsrollen 76 und 77 angeordnet. Diese beiden Antriebsrollen 76 und 77 sind über Tragarme 85 bzw.

86 auf einem gemeinsamen Schlitten 78 angeordnet und liegen in derselben horizontalen Ebene. Der Schlitten 78 ist heb-und senkbar gelagert. Der Antrieb beider Antriebsrollen 76 und 77 erfolgt z.B. über mindestens ein Kettenrad 87 und eine Antriebsrolle 88.

Beispielsweise sind beide Antriebsrollen 76 und 77 miteinander gekuppelt, um gemäß Fig. 2 synchron in Pfeilrichtung I zu laufen. Der Antrieb ist auf dem Schlitten 78 gelagert.

Die Reifenmontage ist wie folgt durchführbar:

1. Der Reifen 1 mit innenliegender Felge 2 und bereits vorher eingelegten Gummi-Abdeckringen 80 wird senkrecht auf die beiden Antriebsrollen 76 und 77, welche als Zylinderrollen ausgebildet sind, gestellt.

2. Die beiden seitlichen hohlen Kegelrollen 4 und 4' mit den vorgeordneten Druckrollen 5 und 5', welche auf den Schlitten 7 und 7' seitlich zustellbar sind, werden durch nicht näher dargestellte Kolbenzylindereinheiten zusammengefahren, bis die Druckrollen 5 und 5' an der Reifenseitenwand anliegen.

3. Die beiden miteinander verbundenen Antriebsrollen 76 und 77, welche auf dem Schlitten 78 bzw. einer Wippe gelagert sind, werden gegen die Reifenlauffläche gedrückt, bis die Innenseite der Reifenlauffläche an den Stützflächen 89 der Felge 2 gemäß Fig. 2 anliegt. Es wird damit eine gewisse Vorspannung auf den Reifenwulst bzw. auf die Kegelrollen 4 und 4' erzeugt.

4. Die beiden Antriebsrollen 76 und 77, welche geriffelt, aufgerauht oder gummiert sein können, werden über das Kettenrad 87 und die Welle 88 in Drehbewegung versetzt und bringen den Reifen 1 mit der Felge 2 zur Rotation.

5. Durch die nicht angetriebenen, jedoch umlaufenden Kegelrollen 4 und 4' mit den vorlaufenden Druckrollen 5 und 5' werden die beiden Reifenwulste 75 des Reifens 1 gleichzeitig über das jeweilige Felgenhorn 11 der Felge 2 gedrückt und die Montage durchgeführt. Es ergibt sich damit vorteilhafterweise eine gleichzeitige Montage der beiden Reifenwulste 75 über das Felgenhorn 11 der Felge 2. Hierbei brauchen die Gummi-Abdeckringe 80 nicht bereits vorher eingelegt zu werden; es besteht auch die Möglichkeit, diese Abdeckringe 80 erst nachträglich einzubringen oder bezüglich der Felge 2 eine Konstruktion vorzusehen, bei welcher diese Abdeckringe 80 vollkommen entfallen können.

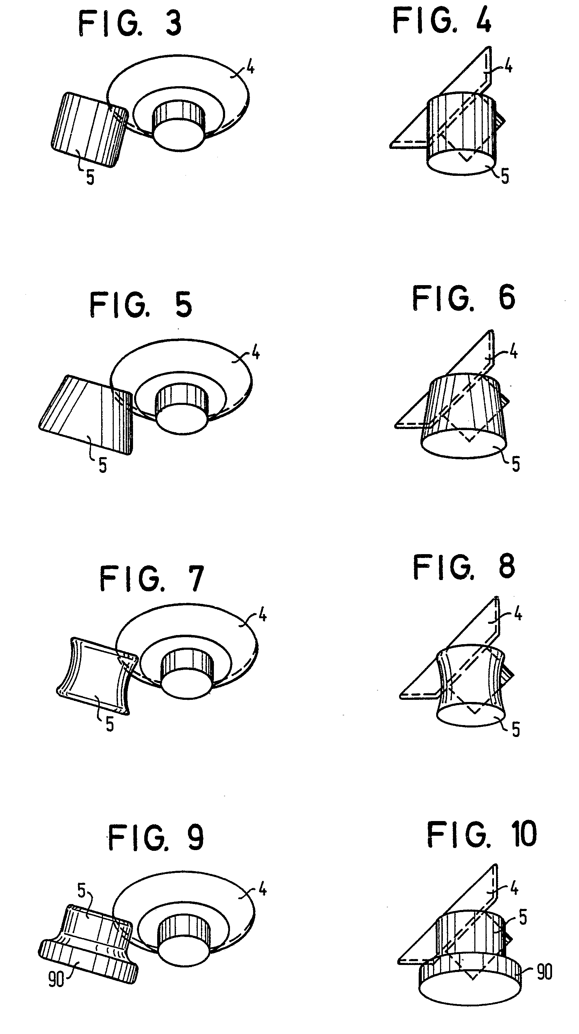

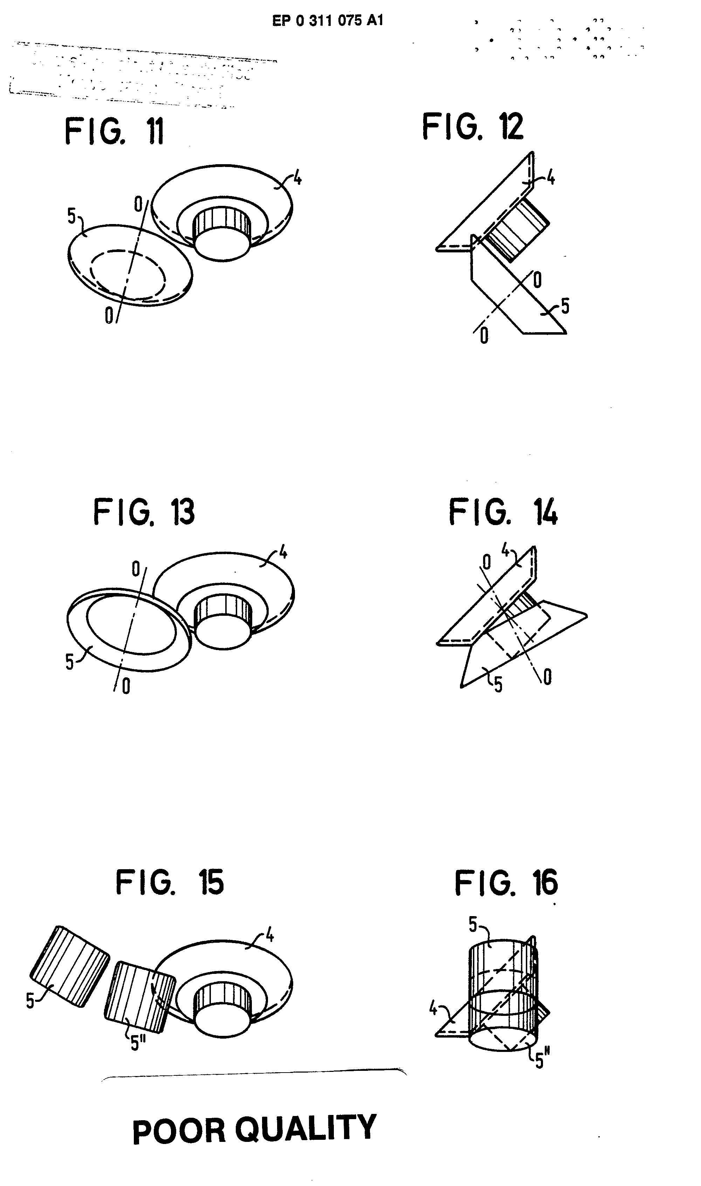

Wie aus Fig. 1 und 2 ersichtlich, ist jeweils der Kegelrolle 4 eine Druckrolle 5 vorgeordnet. Diese Druckrolle 5 ist nach Fig. 3 und 4 zylindrisch ausgebildet. Nah Fig. 5 und 6 besteht die Möglichkeit einer kegelstumpfförmigen Ausbildung, nach Fig. 7 und 8 die Ausbildung als konvexe Rolle, nach Fig. 9 und 10 die Ausbildung als abgesetzte Rolle mit Bund 90, nach Fig. 11 und 12 die Ausbildung in flacher Kegelstumpfform, nach Fig. 13 und 14 die Ausbildung ebenfalls in flacher Kegelstumpfform mit versetzter, räumlich schräger Achse 0-0; nach Fig. 15 und 16 können beispielsweise auch zwei zylindrische Druckrollen 5 und 5" in entsprechender Anordnung vor der Kegelrolle 4 vorgesehen sein.

In jedem Fall ist die Druckrolle 5 in einem bestimmten Winkel bzw. Abstand vor der Kegelrolle 4 angeordnet. Die Kegelrolle 4 preßt hierbei den Reifenwulst 75 radial an die Felge 2 bzw. hinter das Felgenhorn 11, um ein Herausgleiten zu verhindern. Die Druckrolle 5 drückt den Reifenwulst axial und reifenschonend in das Tiefbett der Felge 2.

In nicht näher dargestellter Ausführungsform besteht auch die Möglichkeit, daß die beiden Reifenwulste durch eine Art Spannzange oder Niederhalter fixiert werden können. Weiterhin besteht die Möglichkeit, daß die Felge 2 ggf. auch durch eine separate Spannvorrichtung aufgespannt werden kann.

In nicht näher dargestellter Ausführungsform ist es auch denkbar, daß die Kegelrollen 4 und 4' mit den Druckrollen 5 und 5' bei stehendem Rad 1 und stehender Felge 2 um diese beiden Teile rotieren können und damit die Montage durchführen.

In jedem Fall wird gewährleistet, daß durch die erfindungsgemäße Montagevorrichtung eine gleichzeitige Montage beider Reifenwulste 75 des Reifens 1 in der Felge 2 erfolgt, so daß sich auf einfache Weise eine schnelle und kostensparende Durchführung des Zusammenbaus des Reifens 1 mit der Felge 2 ergibt.

**Ansprüche**

1. Montagevorrichtung für mindestens einen Reifen, dessen Reifenwulste von außen in das Felgenhorn einer Felge einlagerbar sind, mit mindestens einer den Reifen im Bereich der Reifenwulste beaufschlagenden Montagerolle, dadurch gekennzeichnet,

daß die Montagevorrichtung beidseitig der Felge (2) jeweils als Montagewerkzeug (6, 6') eine den betreffenden Reifenwulst (75) beaufschlagende, als Kegelrolle (4) ausgebildete Montagerolle mit mindestens einer in Laufrichtung vorgeordneten Druckrolle (5) aufweist,

daß die Kegelrolle (4) und die Druckrolle (5) zustellbar ausgebildet sind und

daß über eine Antriebsvorrichtung eine Drehbewegung zwischen Reifen (1) und Felge (2) einerseits und den Montagewerkzeugen (6, 6') andererseits erzeugbar ist.

2. Montagevorrichtung nach Anspruch 1, dadurch gekennzeichnet, daß die Montagewerkzeuge (6, 6') zwischen zwei den Reifen stirnseitig beaufschlagenden, zustellbaren, rotierenden Antriebsrollen (76, 77) angeordnet sind.

3. Montagevorrichtung nach Ánspruch 1 und 2, dadurch gekennzeichnet, daß bei vertikaler Anordnung von Reifen (1) und Felge (2) die Antriebsrollen (76, 77) in derselben horizontalen Ebene liegen und heb- und senkbar gelagert sind.

4. Montagevorrichtung nach Anspruch 3, dadurch gekennzeichnet, daß die beiden Antriebsrollen (76, 77) aui einem gemeinsamen Schlitten (78) angeordnet sind.

5. Montagevorrichtung nach Anspruch 1 bis 3, dadurch gekennzeichnet, daß die Montagewerkzeuge (6, 6') jeweils auf verschiebbaren Schlitten (7, 7') angeordnet sind.

6. Montagevorrichtung nach einem der vorhergehenden Ansprüche, gekennzeichnet durch eine die beiden Reifenwulste (75) beaufschlagende Spannvorrichtung.

7. Montagevorrichtung nach einem der vorhergehenden Ansprüche, gekennzeichnet durch eine die Felge (2) halternde spannvorrichtung.

8. Montagevorrichtung nach Anspruch 4 und 5, dadurch gekennzeichnet, daß die Schlitten (7, 7'; 78) für die Montagewerkzeuge (6, 6') und die Antriebsrollen (76, 77) pneumatisch, hydraulisch oder mechanisch steuerbar sind.

9. Montagevorrichtung nach einem der vorhergehenden Ansprüche, dadurch gekennzeichnet, daß die Druckrolle (5) des jeweiligen Montagewerkzeuges (6, 6') zylindrisch, konkav, konvex, kegelstumpfförmig oder abgesetzt ausgebildet ist.

10. Montagevorrichtung nach Anspruch 1, gekennzeichnet durch um den stationären Reifen (1) und die stationäre Felge (2) umlaufende Montagewerkzeuge (6, 6').

# FIG. 1

# FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

POOR QUALITY

Europäisches
Patentamt

# EUROPÄISCHER RECHERCHENBERICHT

Nummer der Anmeldung

## EINSCHLÄGIGE DOKUMENTE

EP 88116568.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 3 401 476</u> (GEBR. HOFMANN GMBH & CO KG MASCHINENFABRIK)<br><br>* Seite 8, Zeilen 20-25; Fig. 1 *<br><br>-- | 1,6,7 | B 60 C 25/06 |
| A | <u>DE - A1 - 3 438 615</u> (CONTINENTAL GUMMI-WERKE AG)<br><br>* Seite 9, Zeilen 1-27; Fig. 3-5 *<br><br>-- | 1,6,7 | |
| A | <u>DE - A - 1 780 148</u> (MONDO PNEU-HANDELS & GUMMIVERWERTUNGS AG WETZIKON)<br><br>* Fig. 3,4 *<br><br>-- | 1-5 | |
| A | <u>DE - A - 2 416 668</u> (CORGHI ELETTROMECCANICA S.P.A.)<br><br>* Fig. 6,7,12,13 *<br><br>---- | 1,9 | RECHERCHIERTE SACHGEBIETE (Int. Cl.4)<br><br>B 60 C |

Der vorliegende Recherchenbericht wurde für alle Patentansprüche erstellt.

| Recherchenort | Abschlußdatum der Recherche | Prüfer |
|---|---|---|
| WIEN | 12-01-1989 | WIDHALM |